# EUROPÄISCHE PATENTSCHRIFT

(11) **EP 3 034 869 B1**
(45) Veröffentlichungstag und Bekanntmachung des Hinweises auf die Patenterteilung: **28.03.2018**
(21) Anmeldenummer: 15198524.9
(22) Anmeldetag: 08.12.2015
(51) Int. Cl.: F03D 80/00, F03D 9/25

(54) **KOMPONENTENTRÄGER**
COMPONENT CARRIER
TRANSPORTEUR DE COMPONANT

(30) Priorität: 19.12.2014 DE 102014226651
(43) Veröffentlichungstag der Anmeldung: 22.06.2016
(73) Patentinhaber: Senvion GmbH, 22297 Hamburg (DE)
(72) Erfinder: Wasner, Jan, 23669 Niendorf/Ostsee (DE); Eusterbarkey, Carsten, 25813 Simonsberg (DE)
(74) Vertreter: Glawe, Delfs, Moll

(56) Entgegenhaltungen:
- EP-A1- 1 715 182
- WO-A1-2010/024510
- WO-A2-2010/069314
- DE-A1-102008 046 210

## Beschreibung

Die Erfindung betrifft Komponententräger für Komponenten in Gondeln von Windenergieanlagen sowie eine Windenergieanlage mit einem entsprechenden Komponententräger.

Windenergieanlagen gemäß dem Stand der Technik umfassen in der Regel einen Rotor, der drehbar an einer Gondel angeordnet ist, wobei die Gondel wiederum drehbar auf einem Turm angeordnet ist. Der Rotor treibt über eine Rotorwelle ein Getriebe an, welches auf seiner Abtriebsseite mit einem Generator verbunden ist. Es sind auch Windenergieanlagen bekannt, bei denen der Rotor direkt, d. h. ohne ein dazwischengeschaltetes Getriebe, mit dem Generator verbunden ist. Eine durch Wind induzierte Rotationsbewegung des Rotors kann so in elektrische Energie gewandelt werden, die dann ggf. über Umrichter und/oder Transformatoren in ein elektrisches Netz eingespeist werden kann.

In der Gondel ist eine Tragstruktur für die dort angeordneten Hauptkomponenten der Windenergieanlage, wie bspw. den Generator oder das Getriebe, vorgesehen. Bei dieser Tragstruktur handelt es sich häufig um eine Stahlträgerkonstruktion mit zwei in Längsrichtung der Gondel verlaufenden Hauptträgern, die durch Querträger zu einer Rahmenkonstruktion miteinander verbunden sind. Die Stahlträgerkonstruktion ist dafür ausgelegt, das hohe Gewicht des Generators und/oder des Getriebes aufzunehmen und in das Lager, um das sich die Gondel gegenüber dem Turm drehen lässt, einzuleiten. Aus der DE 10 2008 046 210 A1 ist eine Tragstruktur bekannt, bei der einzelne Träger der Stahlträgerkonstruktion über biegeweiche Bleche miteinander verbunden sind, um Spannungsspitzen in der Tragstruktur zu vermeiden. Das Dokument EP 1 715 182 A1 beschreibt eine starre Tragstruktur für den Generator einer Windenergieanlage, an welcher der Generator über Dämpfungselemente angebunden ist.

Um weitere Komponenten, wie bspw. Schaltschränke etc., in der Gondel anzuordnen, ist es bekannt zwischen den beiden Längsträgern der Tragstruktur noch weitere Hilfsträger anzuordnen, auf denen dann die weiteren Komponenten befestigt werden können. Die Hilfsträger werden dabei in der Regel an den Längsträgern der Tragstruktur festgeschweißt.

Die Hilfsträger sind für die grundsätzliche Tragfähigkeit der Tragstruktur nicht erforderlich, werden aber bei Belastung der Tragstruktur - bspw. durch Anbringen des Generators auf der Tragstruktur - mitbelastet. Damit sich die Hilfsträger bei entsprechender Belastung nicht von der Tragstruktur lösen, müssen die Schweißverbindungen zwischen Hilfsträger und Tragstruktur hoch belastbar sein, was zu hohen Kosten führt. Trotzdem hat die Erfahrung gezeigt, dass die beschriebenen Schweißverbindungen problematisch sind und daher regelmäßig überprüft werden müssen.

Der Erfindung liegt daher die Aufgabe zugrunde, einen Komponententräger für Komponenten in Gondeln von Windenergieanlagen zu schaffen, bei dem die aus dem Stand der Technik bekannten Nachteile nicht mehr oder nur noch in vermindertem Umfang auftreten.

Gelöst wird diese Aufgabe durch einen Komponententräger gemäß dem Hauptanspruch. Vorteilhafte Weiterbildungen sind Gegenstand der abhängigen Ansprüche.

Demnach betrifft die Erfindung einen Komponententräger für Komponenten in Gondeln von Windenergieanlagen umfassend ein Trägerelement zur Befestigung der Komponenten daran und wenigstens ein biegeweiches Anbindungsblech mit jeweils zwei Anbindungspunkten zur Anbindung des Trägerelementes an einer Tragstruktur der Windenergieanlage, wobei das wenigstens eine Anbindungsblech an seinem einen Anbindungspunkt mit dem Trägerelement und an seinem anderen Anbindungspunkt mit der Tragstruktur verbindbar ist und wobei die Länge des Anbindungsbleches zwischen den beiden Anbindungspunkten größer ist als der Abstand zwischen den beiden Anbindungspunkten.

Die Erfindung betrifft weiterhin eine Windenergieanlage mit einer Tragstruktur in der Gondel, wobei ein erfindungsgemäßer Komponententräger vorgesehen ist, dessen wenigstens eines Anbindungsblech mit seinem einen Anbindungspunkt mit dem Trägerelement und an seinem anderen Anbindungspunkt mit der Tragstruktur verbunden ist.

Der erfindungsgemäße Komponententräger für Komponenten in Gondeln von Windenergieanlagen umfasst neben einem Trägerelement zur Befestigung der Komponenten daran, welches an der Tragstruktur der Windenergieanlage befestigbar ist, noch wenigstens ein Anbindungsblech mit zwei Anbindungspunkten, von denen der erste mit dem Trägerelement und der zweite mit der Tragstruktur der Windenergieanlage verbindbar ist. In anderen Worten ist im Einbauzustand das Anbindungsblech zwischen Trägerelement und Tragstruktur vorgesehen, sodass die Verbindung zwischen Trägerelement und Tragstruktur im Bereich des Anbindungsblechs über eben dieses hergestellt wird.

Da erfindungsgemäß die Länge des Anbindungsbleches zwischen den beiden Anbindungspunkten größer ist als der Abstand zwischen den beiden Anbindungspunkten, ist festgelegt, dass die beiden Anbindungspunkte durch das Anbindungsblech nicht auf kürzestem Weg, d. h. in einer geraden Linie, miteinander verbunden sind, sondern das Anbindungsblech eben nicht gerade verläuft. Dadurch wird erreicht, dass eine gewisse Relativbewegung der beiden Anbindungspunkte zueinander möglich ist, wobei eine entsprechende Relativbewegung zu einer Biegeverformung des Anbindungsbleches führt. Im Vergleich zu den im Stand der Technik üblichen starren Verbindungen - bspw. direkte Schweißverbindungen - können durch ein erfindungsgemäßes Anbindungsblech so Spannungsspitzen im Bereich der Verbindung von Trägerelement und Tragstruktur vermieden werden. Das Anbindungsblech gewährleistet somit eine gewisse Entkopplung zwischen Trägerelement und Tragstruktur.

Um Entsprechendes gewährleisten zu können, ist das Anbindungsblech biegeweich ausgestaltet. "Biegeweich" bedeutet in diesem Zusammenhang, dass sich das Anbindungsblech unter den zu erwartenden Belastungen elastisch verbiegt, ohne dass dabei die Grenze zur plastischen Verformung erreicht oder gar überschritten wird. Zu den zu erwartenden Belastungen gehören neben Gewichtsbelastungen durch die an dem Trägerelement befestigten Komponenten auch die Belastungen, die aufgrund von Verformungen, Schwingungen o. ä. der Tragstruktur oder des Trägerelements auftreten können.

Der Begriff Anbindungspunkt im Sinne dieser Erfindung ist weit zu verstehen. Insbesondere ist der Begriff nicht auf tatsächlich punktförmige Verbindungen des Anbindungsbleches mit dem Trägerelement oder der Tragstruktur beschränkt. Auch linienförmige oder flache Verbindungen des Anbindungsbleches mit dem Trägerelement oder der Tragstruktur, wie sie bspw. bei Schweiß- oder Klebeverbindungen regelmäßig vorliegen, sind von diesem Begriff umfasst.

Das wenigstens eine Anbindungsblech ist vorzugsweise u-förmig ausgestaltet, wobei die Anbindungspunkte jeweils an einem der Schenkel des Anbindungsbleches angeordnet sind. Durch eine entsprechende Formgebung des Anbindungsbleches können zum einen gut die Gewichtsbelastungen durch die an dem Trägerelement befestigten Komponenten in die Tragstruktur eingetragen werden, zum anderen ist eine ausreichende Entkopplung von Tragstruktur und Trägerelement gewährleistet.

Vorzugsweise sind die Schenkel des u-förmigen Anbindungsblechs im Wesentlichen gleich lang, wobei weiter vorzugsweise die Anbindungspunkte auf den beiden Schenkeln auf im Wesentlichen gleicher Höhe angeordnet sind. Bei einer entsprechenden Ausgestaltung können Konstruktionsänderungen bereits bestehender oder geplanter Windenergieanlagen für die Verwendung eines erfindungsgemäßen Komponententrägers deutlich vereinfacht werden. So ist es in der Regel ausreichend, bei einem ursprünglich direkt an der Tragstruktur zu befestigendem Komponententräger wenige Dimensionen so zu ändern, dass zwischen Trägerelement und Tragstruktur ein Anbindungsblech angeordnet werden kann. Insbesondere im Falle von einer zur ursprünglich vorgesehenen Verbindung zwischen Trägerelement und Tragstruktur gleichartigen Befestigung des Anbindungsbleches am Trägerelement und Tragstruktur (bspw. Schweißen) ist eine darüber hinausgehende konstruktive Änderung am Trägerelement oder insbesondere an der Tragstruktur nicht erforderlich. Das Anbindungsblech kann dann nämlich an den Bereichen des Trägerelements oder der Tragstruktur befestigt werden, an denen bei der ursprünglichen Konstruktion eine direkte Verbindung vorgesehen war. Durch ein entsprechendes Anbindungsblech ändert sich darüber hinaus auch die relative Anordnung der auf dem Trägerelement befestigten Komponenten bspw. gegenüber direkt an der Tragstruktur befestigten Elementen nicht, sodass das Vorsehen von erfindungsgemäßen Anbindungsblechen dann grundsätzlich keine weitergehende Konstruktionsänderung hinsichtlich von Versorgungsleitungen o. ä. nach sich zieht.

Das Trägerelement weist vorzugsweise eine ebene Anbindungsseite auf, an der die zu befestigenden Komponenten angeordnet werden können. Das Trägerelement bzw. die Anbindungsseite ist vorzugsweise rechteckig. Das Trägerelement ist bevorzugt so ausgebildet, dass es an zwei gegenüberliegenden Kanten mit jeweils einem Träger der Tragstruktur verbunden werden kann. In diesem Fall ist es grundsätzlich ausreichend, wenn an lediglich einer dieser Kanten wenigstens ein erfindungsgemäßes Anbindungsblech vorgesehen ist. Vorzugsweise sind aber an beiden genannten Kanten Anbindungsbleche vorgesehen.

Das wenigstens eine Anbindungsblech kann auf beliebige Weise mit dem Trägerelement und an der Tragstruktur der Windenergieanlage befestigt sein. Das wenigstens eine Anbindungsblech kann aber auch einstückig mit dem Trägerelement ausgebildet oder fest mit diesem verbunden sein. Es kann bspw. am Trägerelement festgeschweißt sein. Vorzugsweise ist das Anbindungsblech zum Anschweißen an dem entsprechenden Anbindungspunkt an der Tragstruktur ausgebildet.

Das wenigstens eine Anbindungsblech ist vorzugsweise aus Stahl.

Die erfindungsgemäße Windenergieanlage umfasst wenigstens einen erfindungsgemäßen Komponententräger, der an der Tragstruktur in der Gondel der Windenergieanlage befestigt ist. Zur näheren Erläuterung wird auf die obigen Ausführungen verwiesen.

Vorzugsweise handelt es sich bei der Tragstruktur der Windenergieanlage, an der ein erfindungsgemäßer Komponententräger befestigt ist, um den Generatorträger. Beim Generatorträger handelt es sich um eine Tragstruktur, auf der im fertig montierten Zustand der Generator angeordnet ist. Der Generatorträger kann direkt oder über eine weitere Tragstruktur mit dem Lager verbunden sein, um welches sich die Gondel auf dem Turm der Windenergieanlage drehen kann.

Die Erfindung wird nun anhand vorteilhafter Ausführungsformen unter Bezugnahme auf die beigefügten Zeichnungen beispielhaft beschrieben. Es zeigen:
Figur 1: ein Ausführungsbeispiel eines erfindungsgemäßen Komponententrägers;
Figur 2: eine schematische Darstellung einer erfindungsgemäßen Windenergieanlage; und
Figur 3: eine Detaildarstellung eines Teils der Tragstruktur der Windenergieanlage aus Figur 2.

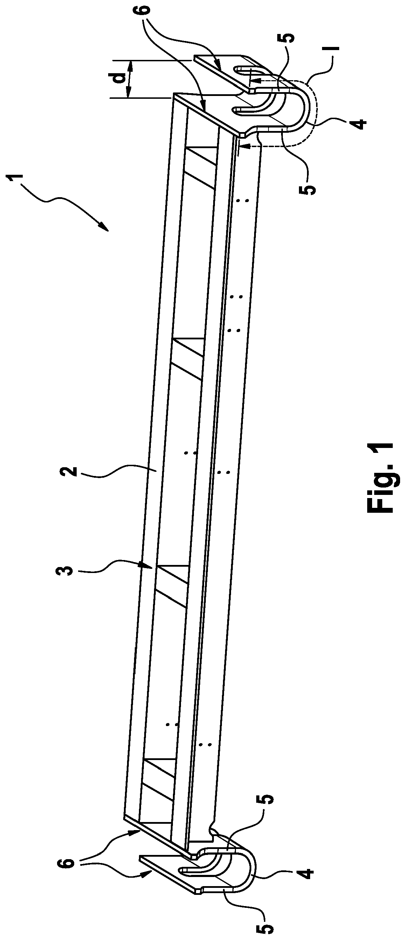

In Figur 1 ist ein erfindungsgemäßer Komponententräger 1 dargestellt. Der Komponententräger 1 umfasst ein Trägerelement 2. Das Trägerelement 2 ist rechteckig ausgestaltet und weist eine ebene Anbindungsseite 3 auf, auf der eine oder mehrere Komponenten einer Windenergieanlage angeordnet und befestigt werden können.

An zwei gegenüberliegenden Kanten des Trägerelements 2 sind jeweils biegeweiche Anbindungsbleche 4 aus Stahl angeordnet. Die Anbindungsbleche 4 sind jeweils u-förmig mit zwei im Wesentlichen gleichlangen Schenkeln 5 ausgestaltet, wobei an den beiden Schenkeln 5 jeweils ein Anbindungspunkt 6 vorgesehen ist. An dem einen Anbindungspunkt 6 ist das Anbindungsblech 4 fest mit dem Trägerelement 2 verbunden, im dargestellten Ausführungsbeispiel mit dem Trägerelement 2 verschweißt. An dem anderen Anbindungspunkt 6 ist das Anbindungsblech 4 mit einer Tragstruktur einer Windenergieanlage verbindbar. Die Anbindungspunkte 6 sind auf im Wesentlichen gleicher Höhe angeordnet.

Durch die U-Form ist sichergestellt, dass die Länge l eines Anbindungsblechs 4 größer ist als der Abstand d der Anbindungspunkte 6 dieses Anbindungsblechs.

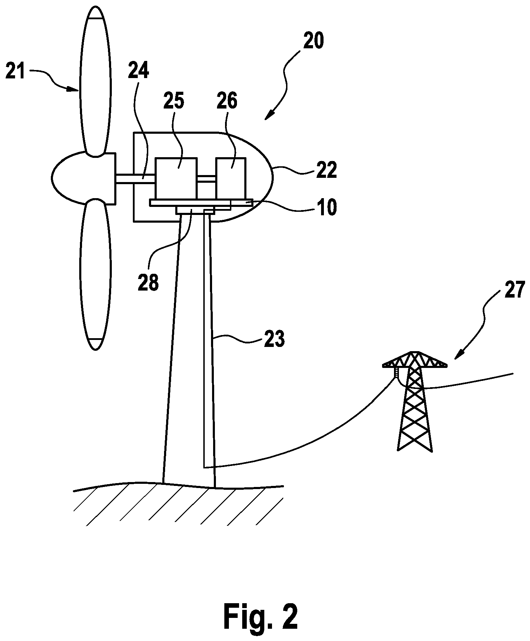

In Figur 2 ist schematisch eine Windenergieanlage 20 dargestellt. Die Windenergieanlage 20 umfasst einen Rotor 21, der drehbar an einer Gondel 22 angeordnet ist. Die Gondel 22 ist wiederum drehbar auf einem Turm 23 angeordnet. Der Rotor 21 treibt über die Rotorwelle 24 ein Getriebe 25 an, welches auf seiner Abtriebsseite mit einem Generator 26 verbunden ist. Eine durch Wind induzierte Rotationsbewegung des Rotors 21 kann so in elektrische Energie gewandelt werden, die dann ggf. über Umrichter und/oder Transformatoren (nicht dargestellt) in ein elektrisches Netz 27 eingespeist werden kann.

Das Getriebe 25 und der Generator 26 sind auf einer Tragstruktur 10 innerhalb der Gondel 22 angeordnet, wobei die Tragstruktur 10 über ein Lager 28 drehbar gegenüber dem Turm 23 gelagert ist. Über diese Tragstruktur 10 und das Lager 28 können das hohe Gewicht des Getriebes 25 und des Generators 26, aber auch es Rotors 21 in den Turm 23 eingeleitet werden. Die eigentliche Verkleidung der Gondel 22 kann ebenfalls an der Tragstruktur 10 befestigt sein.

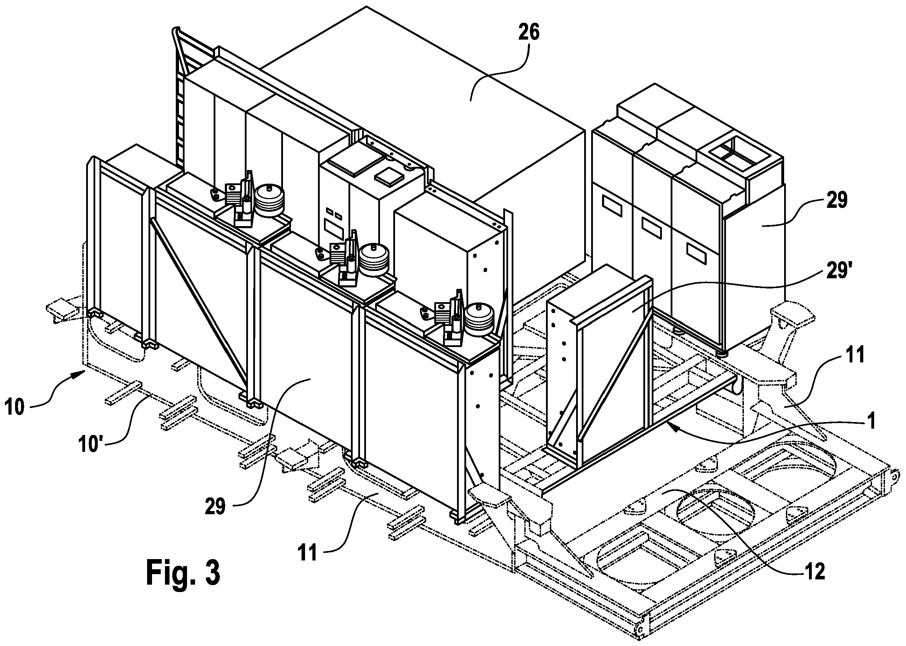

In Figur 3 ist ein Teil 10' der Tragstruktur 10 der Windenergieanlage 20 aus Figur 2a dargestellt. Bei diesem Teil 10' der Tragstruktur 10 handelt es sich um den Generatorträger, d. h. denjenigen Teil 10' der Tragstruktur 10, der den Generator 26 der Windenergieanlage 20 aufnimmt. Daneben sind - anders als in der schematischen Figur 2 - in Figur 3 noch weitere, für die Windenergieanlage 20 wichtige Hilfskomponenten 29 dargestellt, die in der Gondel 22 angeordnet sind. Bei diesen Hilfskomponenten 29 handelt es sich bspw. um Umrichter, Schaltschränke oder Kühlaggregate.

Der in Figur 3 dargestellte Teil 10' der Tragstruktur 10 umfasst zwei parallel verlaufende Längsträger 11 die durch Querverstrebungen 12 derart verbunden sind, dass die Tragstruktur 10 den auf sie einwirkenden Lasten - insbesondere den Gewichtslasten des Generators 26 - standhält. Ein Teil der Hilfskomponenten 29 ist direkt an der Tragstruktur 10 und insbesondere auf den Längsträgern 10 angeordnet und an diesen befestigt. Um darüber hinaus noch weitere Hilfskomponenten 29 an der Tragstruktur 10 anzuordnen, ist ein erfindungsgemäßer Komponententräger 1 - wie er bspw. in Figur 1 gezeigt ist - vorgesehen.

Die weitere Hilfskomponente 29' ist auf der Anbindungsseite 3 des Trägerelements 2 angeordnet. Das Trägerelement 2 selbst ist über die u-förmigen Anbindungsbleche 4 an der Tragstruktur 10 befestigt, wobei die Anbindungsbleche 4 an den Anbindungspunkten 6, die nicht mit dem Trägerelement 2 verbunden sind, mit der Tragstruktur 10 verschweißt sind.

Die Anbindungsbleche 4 sind biegeweich und erlauben eine gewisse Relativbewegung zwischen den beiden Anbindungspunkten 6 eines Anbindungsbleches 4. Kommt es zu einer entsprechenden Relativbewegung, verformen sich die Anbindungsbleche 4 elastisch. Es können so Spannungsspitzen an der Verbindungsstelle zwischen Komponententräger 1 und Tragstruktur 10, wie sie bei einer starren Verbindung gemäß dem Stand der Technik regelmäßig auftreten, abgefangen werden. Der Komponententräger 1 ist zu einem gewissen Grad von der Tragstruktur 10 entkoppelt.

## Patentansprüche

1. Komponententräger (1) für Komponenten (29') in Gondeln (22) von Windenergieanlagen (20) umfassend ein Trägerelement (2) zur Befestigung der Komponenten daran und wenigstens ein biegeweiches Anbindungsblech (4) mit jeweils zwei Anbindungspunkten (6) zur Anbindung des Trägerelementes (2) an einer Tragstruktur (10) der Windenergieanlage (20), wobei das wenigstens eine Anbindungsblech (4) an seinem einen Anbindungspunkt (6) mit dem Trägerelement (2) und an seinem anderen Anbindungspunkt (6) mit der Tragstruktur (10) verbindbar ist und wobei die Länge (l) des Anbindungsbleches (4) zwischen den beiden Anbindungspunkten (6) größer ist als der Abstand (d) zwischen den beiden Anbindungspunkten (6), sodass eine Relativbewegung der beiden Anbindungspunkte (6) zueinander möglich ist, wobei eine entsprechende Relativbewegung zu einer Biegeverformung des Anbindungsbleches (4) führt.

2. Komponententräger nach Anspruch 1,
**dadurch gekennzeichnet, dass**
das wenigstens eine Anbindungsblech (4) u-förmig ausgestaltet ist, wobei die Anbindungspunkte (6) jeweils an einem der Schenkel (5) des Anbindungsblechs (4) angeordnet sind.

3. Komponententräger nach Anspruch 2,
**dadurch gekennzeichnet, dass**
die Schenkel (5) des Anbindungsblechs (4) im Wesentlichen gleich lang und vorzugsweise die Anbindungspunkte (6) auf den beiden Schenkeln (5) auf im Wesentlichen gleicher Höhe angeordnet sind.

4. Komponententräger nach einem der vorhergehenden Ansprüche,
**dadurch gekennzeichnet, dass**
das Trägerelement (2) eine ebene Anbindungsseite (3) zur Befestigung von Komponenten aufweist.

5. Komponententräger nach einem der vorhergehenden Ansprüche,
**dadurch gekennzeichnet, dass**
das Trägerelement (2) und/oder die Anbindungsseite (3) rechteckig ist.

6. Komponententräger nach einem der vorhergehenden Ansprüche,
**dadurch gekennzeichnet, dass**
das Trägerelement (2) an zwei gegenüberliegenden Kanten mit der Tragstruktur verbindbar ist, wobei an wenigstens einer dieser Kanten, vorzugsweise an beiden Kanten, wenigstens ein erfindungsgemäßes Anbindungsblech (4) vorgesehen ist.

7. Komponententräger nach einem der vorhergehenden Ansprüche,
**dadurch gekennzeichnet, dass**
das wenigstens eine Anbindungsblech (4) einstückig mit dem Trägerelement (2) ausgebildet oder fest mit diesem verbunden und/oder zum Anschweißen an die Tragstruktur (10) der Windenergieanlage (20) ausgebildet ist.

8. Komponententräger nach einem der vorhergehenden Ansprüche,
**dadurch gekennzeichnet, dass**
das wenigstens eine Anbindungsblech (4) aus Stahl ist.

9. Windenergieanlage (20) mit einer Tragstruktur (10) in der Gondel (22),
**dadurch gekennzeichnet, dass**
ein Komponententräger (1) gemäß einem der Ansprüche 1 bis 8 vorgesehen ist, dessen wenigstens eines Anbindungsblech (4) mit seinem einen Anbindungspunkt (6) mit dem Trägerelement (2) und mit seinem anderen Anbindungspunkt (6) mit der Tragstruktur (10) der Windenergieanlage (20) verbunden ist.

10. Windenergieanlage nach Anspruch 9,
**dadurch gekennzeichnet, dass**
die Tragstruktur (10) ein Generatorträger ist.

## Claims

1. Component carrier (1) for carrying components (29') in nacelles (22) of wind turbines (20), comprising a carrier element (2), the components being fastened thereon, and at least one flexible attachment plate (4) with in each case two points of attachment (6) for attaching the carrier element (2) to a carrying structure (10) of the wind turbine (20), wherein the at least one attachment plate (4) can be connected, at its one point of attachment (6), to the carrier element (2) and, at its other point of attachment (6), to the carrying structure (10), and wherein the length (l) of the attachment plate (4) between the two points of attachment (6) is greater than the distance (d) between the two points of attachment (6), movement of the two points of attachment (6) relative to one another therefore being possible, wherein a corresponding relative movement results in flexural deformation of the attachment plate (4).

2. Component carrier according to Claim 1,
**characterized in that**
the at least one attachment plate (4) is of u-shaped configuration, wherein the points of attachment (6) are each arranged on one of the limbs (5) of the attachment plate (4).

3. Component carrier according to Claim 2,
**characterized in that**
the limbs (5) of the attachment plate (4) are of essentially equal length and it is preferable for the points of attachment (6) on the two limbs (5) to be arranged at essentially the same height.

4. Component carrier according to one of the preceding claims,
**characterized in that**
the carrier element (2) has a planar attachment side (3) on which to fasten components.

5. Component carrier according to one of the preceding claims,
**characterized in that**
the carrier element (2) and/or the attachment side (3) are/is rectangular.

6. Component carrier according to one of the preceding claims,
**characterized in that**
the carrier element (2) can be connected to the carrying structure along two opposite edges, wherein at least one attachment plate (4) according to the invention is provided along at least one of these edges, preferably along both edges.

7. Component carrier according to one of the preceding claims,
**characterized in that**
the at least one attachment plate (4) is formed in one piece with the carrier element (2) or is fixed to the same and/or is designed to be welded onto the carrying structure (10) of the wind turbine (20).

8. Component carrier according to one of the preceding claims,
**characterized in that**
the at least one attachment plate (4) is made of steel.

9. Wind turbine (20) having a carrying structure (10) in the nacelle (22),
**characterized by**
the provision of a component carrier (1) according to one of Claims 1 to 8, the at least one attachment plate (4) of said component carrier being connected, by way of its one point of attachment (6), to the carrier element (2) and, by way of its other point of attachment (6), to the carrying structure (10) of the wind turbine (20).

10. Wind turbine according to Claim 9,
**characterized in that**
the carrying structure (10) is a generator carrier.

## Revendications

1. Support de composants (1) pour des composants (29') dans des nacelles (22) d'éoliennes (20), comprenant un élément de support (2) pour la fixation des composants à celui-ci et au moins une tôle de liaison flexible (4) avec à chaque fois deux points de liaison (6) pour la liaison de l'élément de support (2) à une structure de support (10) de l'éolienne (20), l'au moins une tôle de liaison (4) pouvant être raccordée au niveau de l'un de ses points de liaison (6) à l'élément de support (2) et au niveau de son autre point de liaison (6) à la structure de support (10) et la longueur (1) de la tôle de liaison (4) entre les deux points de liaison (6) étant supérieure à la distance (d) entre les deux points de liaison (6), de telle sorte qu'un mouvement relatif des deux points de liaison (6) l'un par rapport à l'autre soit possible, un mouvement relatif correspondant entraînant une déformation par flexion de la tôle de liaison (4).

2. Support de composants selon la revendication 1,
**caractérisé en ce que**
l'au moins une tôle de liaison (4) est réalisée en forme de U, les points de liaison (6) étant à chaque fois disposés au niveau de l'une des branches (5) de la tôle de liaison (4).

3. Support de composants selon la revendication 2,
**caractérisé en ce que**
les branches (5) de la tôle de liaison (4) présentent essentiellement la même longueur et les points de liaison (6) sur les deux branches (5) sont disposés de préférence essentiellement à la même hauteur.

4. Support de composants selon l'une quelconque des revendications précédentes,
**caractérisé en ce que**
l'élément de support (2) présente un côté de liaison plan (3) pour la fixation de composants.

5. Support de composants selon l'une quelconque des revendications précédentes,
**caractérisé en ce que**
l'élément de support (2) et/ou le côté de liaison (3) sont rectangulaires.

6. Support de composants selon l'une quelconque des revendications précédentes,
**caractérisé en ce que**
l'élément de support (2) peut être relié à la structure de support au niveau de deux arêtes opposées, au moins une tôle de liaison (4) selon l'invention étant prévue au niveau d'au moins l'une de ces arêtes, de préférence au niveau des deux arêtes.

7. Support de composants selon l'une quelconque des revendications précédentes,
**caractérisé en ce que**
l'au moins une tôle de liaison (4) est réalisée d'une seule pièce avec l'élément de support (2) ou est reliée fixement à celui-ci et/ou est réalisée de manière à être soudée à la structure de support (10) de l'éolienne (20).

8. Support de composants selon l'une quelconque des revendications précédentes,
**caractérisé en ce que**
l'au moins une tôle de liaison (4) est en acier.

9. Éolienne (20) comprenant une structure de support (10) dans la nacelle (22),
**caractérisée en ce**
**qu'**il est prévu un support de composants (1) selon l'une quelconque des revendications 1 à 8, dont l'au moins une tôle de liaison (4) est reliée à l'élément de support (2) par l'un de ses points de liaison (6) et à la structure de support (10) de l'éolienne (20) par son autre point de liaison (6).

10. Éolienne selon la revendication 9,
**caractérisée en ce que**
la structure de support (10) est un support de générateur.
